(19) Europäisches Patentamt / European Patent Office / Office européen des brevets

(11) **EP 4 281 655 B1**

(12) **FASCICULE DE BREVET EUROPEEN**

(45) Date de publication et mention de la délivrance du brevet:
**17.09.2025 Bulletin 2025/38**

(21) Numéro de dépôt: **22704403.9**

(22) Date de dépôt: **07.01.2022**

(51) Classification Internationale des Brevets (IPC):
**F01M 13/00** (2006.01)    **F01M 11/10** (2006.01)
**F02D 41/20** (2006.01)    **F02D 41/22** (2006.01)
**F16L 35/00** (2006.01)    **F16L 55/00** (2006.01)

(52) Classification Coopérative des Brevets (CPC):
**F01M 11/10; F01M 13/00; F02D 41/22;**
F01M 2250/00; F01M 2250/60; F02D 41/222;
F02D 2041/2089; F02D 2200/0402;
F02D 2200/0406; F02D 2250/08; F02D 2250/11;
F16L 2201/10; F16L 2201/30

(86) Numéro de dépôt international:
**PCT/FR2022/050036**

(87) Numéro de publication internationale:
**WO 2022/157437 (28.07.2022 Gazette 2022/30)**

(54) **SYSTÈME ET PROCÉDÉ POUR DÉTECTER UNE PANNE DANS UN TRAJET DE FLUIDE D'UN SYSTÈME DE FLUIDE**

SYSTEM UND VERFAHREN ZUR ERKENNUNG EINES FEHLERS IN EINEM STRÖMUNGSWEG EINES FLUIDSYSTEMS

SYSTEM AND METHOD FOR DETECTING A FAILURE IN A FLUID PATH OF A FLUID SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2021 FR 2100626**

(43) Date de publication de la demande:
**29.11.2023 Bulletin 2023/48**

(73) Titulaires:
• **NOVARES France**
  **78140 Vélizy-Villacoublay (FR)**
• **Tribosonics Limited**
  **Sheffield South Yorkshire S2 4ED (GB)**

(72) Inventeurs:
• **NIVARD, Nicolas**
  **62123 Simencourt (FR)**
• **SCHWARTZ, Scott**
  **Janesville, Wisconsin 53546 (US)**
• **CORBETT, Chris**
  **Delavan, Wisconsin 53115 (US)**
• **HARPER, Philip**
  **Sheffield**
  **South Yorkshire S10 2FD (GB)**
• **HILL, Samuel**
  **York**
  **Yorkshire YO31 8NR (GB)**
• **WALLIS, Nicholas**
  **Sheffield**
  **South Yorkshire S10 3PB (GB)**
• **SWAIN, Stephen**
  **Ilkestone**
  **Derbyshire DE7 6FR (GB)**

(74) Mandataire: **Germain Maureau**
  **12, rue Boileau**
  **69006 Lyon (FR)**

(56) Documents cités:
CN-A- 107 676 185     CN-A- 108 194 213
CN-A- 110 531 213     CN-U- 208 605 242
US-A1- 2003 178 015   US-A1- 2015 252 922
US-A1- 2017 089 302   US-A1- 2020 284 383

EP 4 281 655 B1

## Description

### Domaine de l'invention

L'invention se rapporte à des systèmes et des procédés pour détecter une panne dans un trajet de fluide d'un système de fluide. L'invention est particulièrement utile dans le secteur du transport.

### Arrière-plan technologique

Les systèmes de ventilation du carter éliminent les gaz indésirables du carter d'un moteur à combustion interne. Les gaz indésirables (également appelés gaz de «fuite») sont des gaz qui ont fui de la chambre de combustion vers le carter à travers les segments de piston du moteur. Les gaz de fuite doivent être évacués hors du carter, sinon les gaz peuvent se combiner avec la vapeur d'huile moteur présente dans le carter pour former de la boue, et peuvent provoquer la dilution de l'huile moteur avec du carburant non brûlé.

Les premiers moteurs à combustion interne utilisaient des systèmes de ventilation du carter pour évacuer les gaz de fuite dans l'atmosphère. Les moteurs à combustion interne plus récents utilisent un système de recyclage des gaz de carter (PCV) pour renvoyer les gaz de fuite dans la chambre de combustion pour les mélanger avec le mélange air/carburant et la combustion. Actuellement, il est courant que les autorités de réglementation nationales exigent que les nouveaux véhicules soient équipés d'un système PCV pour éviter les émissions de gaz de fuite dans l'atmosphère et réduire ainsi les émissions polluantes des véhicules.

Les systèmes PCV typiques comprennent un tube, une soupape ou un clapet anti-retour et une source de vide (telle qu'un collecteur d'admission). Les autorités de réglementation nationales exigent souvent que ces systèmes PCV soient surveillés pour détecter toute défaillance qui entraînerait une fuite des gaz de fuite. Un moyen actuel servant à assurer une telle surveillance est un capteur de pression de gaz à l'intérieur du tube. Un problème posé avec cet agencement est que les capteurs de pression de gaz ne détectent pas tous les modes de défaillance possibles et que les capteurs de pression de gaz ne sont souvent pas fiables.

Des changements récents de la législation exigent qu'un dysfonctionnement du système PCV soit détecté lorsque tout conduit, par exemple un tuyau, un tube ou une conduite qui transporte les vapeurs du carter présente une coupure ou une cassure plus grande ou égale à la plus petite surface de section transversale interne de ce conduit. CN107676185 A décrit un système de détection connu de l'art antérieur.

Un objet de la présente invention est de fournir un système de détection alternatif ou amélioré, approprié pour détecter une panne d'un trajet de fluide d'un système de fluide.

### Résumé de l'invention

La présente invention propose un système et un procédé de détection selon les revendications annexées.

En particulier, la présente invention se rapporte à un système de détection pour détecter une panne dans un trajet de fluide d'un système de fluide, le système de détection comprenant :

au moins un conduit comprenant une paroi de conduit qui définit un trajet de fluide pour le transfert de fluide et au moins un élément électroconducteur s'étendant le long de l'au moins un conduit et qui forme un chemin de signal électrique pour un premier signal électrique qui indique un état de l'au moins un conduit ; et,
une borne électrique reliée électriquement à l'au moins un élément électroconducteur de sorte que le premier signal électrique soit transmis à la borne électrique via le chemin de signal électrique.

Le système de détection comprend en outre au moins un connecteur relié à l'au moins un conduit et au moins un capteur configuré pour déterminer un état de l'au moins un connecteur et générer un deuxième signal électrique, ledit au moins un capteur étant relié électriquement à l'au moins un élément électroconducteur de sorte que le deuxième signal électrique soit transmis à la borne électrique via le chemin de signal électrique.

Le système de détection comprend en outre une unité de traitement pour recevoir les premiers et deuxième signaux électriques et surveiller les premier et deuxième signaux électriques pour une caractéristique électrique qui indique une panne de l'au moins un conduit et/ou une panne ou une déconnexion de l'au moins un connecteur respectivement.

Dans un mode de réalisation particulier de la présente invention, l'unité de traitement est configurée pour déterminer qu'une panne est présente dans l'au moins un conduit ou que l'au moins un connecteur est totalement ou partiellement déconnecté en utilisant la caractéristique électrique surveillée.

Dans un mode de réalisation particulier de la présente invention, le deuxième signal électrique est un signal électrique de capteur codé avec des données provenant de l'au moins un capteur et le premier signal électrique est un signal électrique de conduit codé avec des données relatives à l'état de l'au moins un conduit.

Dans un mode de réalisation particulier de la présente invention, le signal électrique de conduit est appliqué à l'au moins un élément électroconducteur indépendamment du signal électrique du capteur.

Dans un mode de réalisation particulier de la présente invention, la caractéristique électrique est une ou plusieurs caractéristique(s) choisie(s) dans le groupe comprenant : la résistance, la conductance, la capacité, l'inductance, la réponse en fréquence, l'amplitude ou le temps de transit, ou un changement de ceux-ci.

Dans un mode de réalisation particulier de la présente invention, l'au moins un élément électroconducteur s'étend sur toute la longueur de l'au moins un conduit.

Dans un mode de réalisation particulier de la présente invention, l'au moins un élément électroconducteur s'étend de manière circonférentielle autour d'une surface de la paroi de conduit de l'au moins un conduit.

Dans un mode de réalisation particulier de la présente invention, l'au moins un élément électroconducteur est au moins partiellement intégré dans la paroi de conduit et/ou fournit une surface externe ou interne de l'au moins un conduit.

Dans un mode de réalisation particulier de la présente invention, l'au moins un élément électroconducteur comprend un(e) ou plusieurs couche(s), ruban(s), film(s), fil(s), tresse(s) conducteur(s)/conductrice(s) ou un polymère conducteur.

Dans un mode de réalisation particulier de la présente invention, l'au moins un conduit comprend en outre une pluralité d'éléments électroconducteurs.

Dans un mode de réalisation particulier de la présente invention, la pluralité d'éléments électroconducteurs comprend deux éléments électroconducteurs séparés ou plus configurés chacun pour former des parties de détection parallèles du chemin de signal électrique.

Dans un mode de réalisation particulier de la présente invention, au moins l'un de la pluralité d'éléments électroconducteurs est configuré pour former une partie de retour du chemin de signal électrique.

Dans un mode de réalisation particulier de la présente invention, l'unité de traitement est configurée pour surveiller le premier et/ou deuxième signal électrique respectif de chacun de la pluralité d'éléments électroconducteurs pour un changement relatif des caractéristiques électriques du premier et/ou deuxième signal électrique respectif.

Dans un mode de réalisation particulier de la présente invention, le système de détection comprend une pluralité de conduits et une pluralité de connecteurs tous reliés à une borne électrique commune.

Dans un mode de réalisation particulier de la présente invention, la pluralité de conduits s'étend radialement à partir d'une borne électrique commune.

Dans un mode de réalisation particulier de la présente invention, le chemin de signal électrique comprend une partie de détection s'étendant de la borne électrique à une extrémité distante de l'au moins un élément électroconducteur au niveau d'une première extrémité de l'au moins un conduit, et, une partie de retour s'étendant à partir de l'extrémité distante de l'au moins un élément électroconducteur vers la borne électrique.

Dans un mode de réalisation particulier de la présente invention, le chemin de signal électrique comprend un conducteur électrique, qui se trouve à l'extérieur de l'au moins un conduit.

Dans un mode de réalisation particulier de la présente invention, le conducteur électrique externe est un châssis d'un véhicule.

Dans un mode de réalisation particulier de la présente invention, l'unité de traitement comprend un circuit en pont.

Dans un mode de réalisation particulier de la présente invention, l'au moins un élément électroconducteur comprend au moins une bobine.

Dans un mode de réalisation particulier de la présente invention, l'au moins une bobine assure un couplage sans fil pour se coupler à l'au moins un connecteur et/ou à l'au moins un capteur.

Dans un mode de réalisation particulier de la présente invention, le chemin de signal électrique comprend en outre une puce d'identification par radiofréquence, RFID, pour transmettre des données vers ou depuis la borne électrique et/ou l'au moins un connecteur.

Dans un mode de réalisation particulier de la présente invention, l'au moins un capteur est un ou plusieurs capteur(s) parmi : un capteur de pression de contact étanche, un capteur d'alignement ; un capteur de contact électrique dans lequel des contacts électriques sont établis ou rompus par la liaison de l'au moins un connecteur ; un capteur magnétique dans lequel un circuit magnétique est complété par la liaison de l'au moins un connecteur ; un capteur sans fil ou un capteur ultrasonore.

Dans un mode de réalisation particulier de la présente invention, l'au moins un capteur est intégré dans l'au moins un connecteur.

La présente invention se rapporte en outre à un véhicule comprenant le système de détection tel que défini ci-dessus.

Dans un mode de réalisation particulier de la présente invention, le système de détection fait partie d'un système de recyclage des gaz de carter.

La présente invention se rapporte en outre à un procédé pour détecter un état d'un système de fluide en utilisant le système de détection tel que défini ci-dessus, et comprenant les étapes consistant :

à recevoir un premier signal électrique et un deuxième signal électrique à partir d'au moins un élément électroconducteur dans l'au moins un conduit ; et
à surveiller les premier et deuxième signaux électriques pour une caractéristique électrique qui indique une panne de l'au moins un conduit et/ou une déconnexion de l'au moins un connecteur.

Dans un mode de réalisation particulier de la présente invention, le procédé comprend en outre : la détermination d'une panne dans le trajet de fluide du système de fluide sur la base d'une caractéristique électrique surveillée.

Dans un mode de réalisation particulier de la présente invention, la caractéristique électrique est une ou plusieurs caractéristique(s) choisie(s) dans le groupe comprenant : la résistance, la conductance, la capacité, l'inductance, la réponse en fréquence, l'amplitude ou le temps de transit, ou un changement de ceux-ci.

**Bref aperçu des figures**

L'invention sera maintenant décrite, à titre d'exemple uniquement, en référence aux dessins joints, dans lesquels :

Figure 1 montre une vue isométrique d'un système de détection.

Figure 2a montre une représentation schématique d'un premier exemple de configuration du système de détection de l'invention, en particulier, indiquant une première configuration d'un élément électroconducteur et d'un chemin de signal électrique.

Figure 2b montre une représentation schématique d'un deuxième exemple de configuration du système de détection de l'invention, en particulier, indiquant une deuxième configuration d'un élément électroconducteur et d'un chemin de signal électrique.

Figure 2c montre une représentation schématique d'un troisième exemple de configuration du système de détection de l'invention, en particulier, indiquant une troisième configuration d'un élément électroconducteur et d'un chemin de signal électrique.

Figure 2d montre une représentation schématique d'un quatrième exemple de configuration du système de détection de l'invention, en particulier, indiquant une quatrième configuration d'un élément électroconducteur et d'un chemin de signal électrique.

Figure 2e montre une représentation schématique d'un cinquième exemple de configuration du système de détection de l'invention, en particulier, indiquant une cinquième configuration d'un élément électroconducteur et d'un chemin de signal électrique.

Figure 2f montre une représentation schématique d'un sixième exemple de configuration du système de détection de l'invention, en particulier, indiquant une sixième configuration d'un élément électroconducteur et d'un chemin de signal électrique.

Figure 2g montre une représentation schématique d'un septième exemple de configuration du système de détection de l'invention, en particulier, indiquant une septième configuration d'un élément électroconducteur et d'un chemin de signal électrique.

Figure 2h montre une représentation schématique d'un huitième exemple de configuration du système de détection de l'invention, en particulier, indiquant une huitième configuration d'un élément électroconducteur et d'un chemin de signal électrique.

Figure 3 montre une autre représentation schématique d'un exemple de configuration du système de détection de l'invention.

Figure 4 montre un schéma de principe d'un exemple de circuit en pont utilisé pour détecter un changement de la résistance provoqué par la déformation d'un élément conducteur d'un système de détection selon la figure 1.

Figure 5 montre un schéma de principe d'un autre exemple de circuit en pont utilisé pour détecter un changement de la résistance provoqué par la déformation d'un élément conducteur d'un système de détection selon la figure 1.

Figure 6a montre un schéma d'un connecteur intelligent pour détecter une coupure entre deux éléments d'un système de détection selon cette divulgation.

Figure 6b montre un schéma d'un connecteur intelligent pour détecter une liaison entre deux éléments d'un système de détection selon cette divulgation.

Figure 7 montre une représentation d'un conduit de détection d'un système de détection selon cette divulgation.

Figure 8 montre un exemple d'assemblage comprenant de multiples systèmes de détection selon la figure 1.

Figure 9 est un organigramme indiquant un procédé de fonctionnement d'un système de détection selon cette divulgation.

**Description détaillée**

*Agencement général*

La présente invention et la description se réfèrent à des procédés et des appareils qui sont utilisés pour déterminer un état d'un trajet de fluide dans un système de fluide. L'état peut être celui qui peut entraîner ou engendrer le risque de fuite de fluide du système de fluide. L'état peut être une panne dans un trajet de fluide défini par un ou plusieurs conduit(s) ou connecteur(s).

La panne peut être mécanique et peut comprendre une déformation, un dommage ou une coupure du ou des plusieurs conduit(s) ou connecteur(s). La déformation/le dommage peut inclure toute forme ou épaisseur anormale d'un conduit ou d'une paroi de conduit qui est en dehors des paramètres de fonctionnement normaux. La déformation/le dommage peut inclure une modification d'une section transversale du conduit ou de la paroi de conduit à un ou plusieurs emplacement(s) provoquée, par exemple, par un renflement ou une autre distorsion dans la paroi de conduit résultant d'une faiblesse locale. La déformation/le dommage peut inclure une cassure de l'intégrité d'une paroi du conduit qui entraînerait une perte de fluide. La cassure peut être une ouverture telle qu'un trou, une fente, une rupture ou une coupure ou disjonction partielle ou totale du conduit. La panne peut être une déformation, un dommage ou la déconnexion partielle ou totale d'un ou de plusieurs connecteur(s) dans le système de fluide.

La panne peut résulter en une ouverture dans le trajet de fluide qui est au moins aussi grande que la plus petite section transversale du trajet de fluide défini dans le système de fluide et/ou le conduit et les connecteurs qui sont surveillés par le système de détection.

On notera que le terme «fluide» peut désigner un liquide, un gaz ou de la vapeur.

D'une manière générale, la présente invention propose un système de détection comprenant : un capteur ; un conduit configuré pour transférer un fluide ; et, une borne électrique ; dans lequel le conduit est configuré pour transmettre un signal électrique du capteur à la borne électrique.

Plus spécifiquement, la présente invention peut fournir un système de détection pour détecter une panne dans un trajet de fluide du système de fluide, le système de fluide comprenant un ou plusieurs conduit(s) et un ou plusieurs connecteur(s) pour coupler ou délimiter les conduits dans le système de fluide, le système de détection comprenant : un capteur configuré pour déterminer un état couplé d'un connecteur ; un conduit relié au connecteur et comprenant une paroi qui définit un trajet de fluide pour le transfert de fluide et un élément électroconducteur qui forme un chemin de signal électrique pour un premier signal électrique ; et, une unité de traitement configurée pour recevoir le premier signal électrique et surveiller le signal électrique pour une caractéristique électrique qui indique une panne du conduit et/ou une déconnexion du connecteur. Par exemple, l'unité de traitement peut être configurée pour déterminer qu'une panne est présente dans le conduit ou que le connecteur est devenu totalement ou partiellement déconnecté en utilisant l'au moins une caractéristique électrique surveillée.

Le signal électrique peut être un premier signal électrique ou un deuxième signal électrique, ou soit le premier soit le deuxième signal électrique est un signal électrique de capteur, et l'autre des premier et deuxième signaux électriques est un signal électrique de conduit. Le signal électrique de conduit peut être appliqué à l'élément électroconducteur indépendamment du signal de capteur. Dans un mode de réalisation, le signal électrique de conduit peut être une tension qui est appliquée à l'au moins un élément électroconducteur. La surveillance de la tension, par exemple de l'amplitude de la tension, peut fournir des informations relatives à la résistance de l'élément électroconducteur qui peut changer en cas d'une panne du conduit. Le signal de capteur peut être fourni séparément de ce signal et peut être surveillé séparément.

Le système de détection peut être fourni comme faisant partie d'un système de fluide dans lequel un gaz, un liquide ou de la vapeur est transporté(e) d'un emplacement à un autre dans, par exemple, un véhicule. Le système de fluide peut être hydraulique ou pneumatique. Le fluide peut être un liquide de refroidissement, un lubrifiant, de l'air, de l'huile, du carburant ou tout autre gaz, liquide ou vapeur. Des utilisations typiques de l'invention peuvent inclure un système de ventilation des gaz de carter comme décrit dans la section d'arrière-plan, un système de refroidissement de bloc-batterie, un système de refroidissement de moteur électrique, un système de lubrification, un système de carburant ou un système de refroidissement de véhicule à hydrogène. Le système peut faire partie d'un moteur à combustion interne classique, d'un véhicule hybride, d'un véhicule électrique, d'un véhicule à hydrogène ou à pile à combustible. On notera que le système de détection peut être utilisé dans d'autres applications en dehors de l'automobile, telles que les vaisseaux aérospatiaux ou marins, ou ailleurs. Le système de détection peut être utilisé pour détecter des fuites ou des défaillances mécaniques lors de l'utilisation d'un système et/ou peut être utilisé pour tester l'assemblage du système de fluide pour s'assurer que le système ne comprend aucune fuite avant chaque utilisation ou après un assemblage initial.

Le système de détection peut faire partie d'un système de surveillance tel qu'un système de surveillance de l'état du moteur ou un système de diagnostic embarqué. Par conséquent, le système de détection de fluide peut surveiller le système de fluide pour des fuites, ou un risque de fuite, et fournir des données ou un signal indiquant un état du système de fluide à un système global de surveillance. Les données et/ou le signal capturé ou déterminé par le système de détection peut/-peuvent être utilisé(e)(s) pour fournir à un utilisateur un état du système de fluide. Par exemple, le système de détection peut fournir un signal indiquant qu'il y a une possible fuite et l'emplacement de la fuite.

*Conduit*

Le conduit peut être configuré pour transférer un fluide d'un premier emplacement au niveau d'une première extrémité à un deuxième emplacement au niveau d'une deuxième extrémité le long d'un trajet de fluide comme cela est bien connu dans l'état de la technique. Le conduit peut comprendre une première extrémité et une deuxième extrémité et peut être constitué d'une seule partie ou de multiples parties reliées entre elles en utilisant des liaisons appropriées. Les sections du conduit peuvent être reliées par des connecteurs appropriés, par exemple les connecteurs détectés décrits ici, ou elles peuvent être assemblées par adhérence, retenue mécanique ou soudage, par exemple.

Les connecteurs peuvent être des connecteurs en deux parties, tels qu'un connecteur mâle/femelle dans lequel une première partie mâle est insérée de manière étanche dans une deuxième partie femelle. Les connecteurs peuvent comprendre, par exemple, des connecteurs à compression ou des connecteurs à ajustage par poussée présentant un ajustement avec serrage et/ou un ou plusieurs élément(s) d'étanchéité comme cela est bien connu dans l'état de la technique.

Le conduit peut être rigide ou flexible et peut avoir n'importe quelle longueur ou section transversale souhaitée. Dans de nombreux modes de réalisation, la section transversale du conduit sera circulaire, le conduit étant globalement cylindrique. Le conduit peut comprendre une paroi qui définit un trajet de fluide pour le transfert de fluide.

*Élément électroconducteur*

Comme indiqué ci-dessus, le conduit peut être configuré pour transmettre un signal d'un capteur à une borne électrique. Le signal peut être un signal électrique et peut être transmis le long d'un ou de plusieurs chemin(s) de signal électrique conducteur prévu(s) à l'intérieur, par exemple en tant que partie, du conduit.

En conséquence, le conduit peut comprendre un ou plusieurs élément(s) électroconducteur(s) intégré(s) à l'intérieur, sur ou dans une paroi du conduit. Le ou les plusieurs élément(s) électroconducteur(s) peut/peuvent comprendre de multiples chemins de signaux électriques distincts comme décrit plus en détail ci-dessous. Les éléments électroconducteurs peuvent être fournis spécifiquement aux fins du système de détection, ou peuvent remplir un double objectif. Dans certains modes de réalisation, les éléments électroconducteurs peuvent être utilisés pour une décharge électrostatique ou un blindage électromagnétique, par exemple.

L'élément électroconducteur peut comprendre un(e) ou plusieurs couche(s), film(s), fil(s), tresse(s) conducteur(s)/conductrice(s) ou un polymère conducteur. L'élément électroconducteur peut s'étendre sur toute la longueur du conduit de détection d'une première extrémité à une deuxième extrémité, par exemple du capteur à la borne électrique et/ou à l'unité de traitement. L'élément électroconducteur peut s'étendre de manière circonférentielle autour de la paroi du conduit de manière à entourer au moins partiellement ou totalement le conduit. Ainsi, l'élément électroconducteur peut comprendre un(e) ou plusieurs manchon(s), tube(s) ou couche(s) à l'intérieur, sur ou dans la paroi de conduit. L'élément électroconducteur peut être au moins partiellement intégré dans la paroi du conduit et/ou peut fournir une surface interne du conduit et/ou recouvre et/ou surtresse le conduit.

Il peut y avoir une pluralité d'éléments électroconducteurs. La pluralité d'éléments électroconducteurs peuvent être répartis de manière circonférentielle autour du conduit et/ou peuvent être répartis radialement à travers l'épaisseur de la paroi de conduit. Ainsi, il peut y avoir un ou plusieurs élément(s) conducteur(s) agencé(s) de manière concentrique et/ou un ou plusieurs élément(s) électroconducteur(s) distinct(s) s'étendant longitudinalement sur la longueur du conduit. Les éléments électroconducteurs s'étendant longitudinalement peuvent être agencés de manière hélicoïdale ou parallèlement à l'axe longitudinal du conduit.

L'élément électroconducteur peut comprendre un polymère conducteur ou un élément conducteur métallique. Le polymère conducteur peut comprendre de multiples couches conductrices ou bandes conductrices qui font partie de la paroi de conduit. Les différentes couches ou bandes conductrices peuvent être utilisées pour fournir différents chemins de signaux qui sont configurés pour transporter différents signaux électriques. Le polymère conducteur peut être utilisé, par exemple, pour la suppression des interférences électromagnétiques en tant que fonction primaire ou secondaire.

Les éléments électroconducteurs peuvent être des fils intégrés dans la paroi du conduit et peuvent être coextrudés. Les fils peuvent être sur-tressés. Les éléments électroconducteurs peuvent être un ruban métallique enroulé autour du conduit.

*Caractéristiques électriques/détection du conduit*

L'élément électroconducteur peut comprendre une ou plusieurs caractéristique(s) électrique(s) qui peut/peuvent être surveillée(s) par le système de détection pour déterminer si la ou les plusieurs caractéristique(s) électrique(s) change/changent avec le temps. Un changement de la ou des plusieurs caractéristique(s) électrique(s) peut indiquer une panne du conduit. La panne peut être un changement de la forme du conduit tel qu'une dilatation (par exemple un renflement provoqué par une défaillance de l'intégrité structurelle de la paroi de conduit) ou une compression (par exemple une compression imprévue ou indésirable), ou une rupture dans laquelle une ouverture dans la paroi du conduit se produit. La panne peut comprendre une rupture ou une coupure complète de deux parties du conduit au niveau d'un connecteur ou dans une longueur continue de la paroi de conduit.

La surveillance des caractéristiques électriques du conduit peut permettre au système de fluide de détecter une cassure complète du conduit entraînant une perte totale d'un signal électrique. En variante ou en plus, la surveillance du conduit peut permettre de détecter des dommages par une perte de signal dans un ou plusieurs des trajets de signal ou un changement d'une caractéristique électrique (autre qu'une perte de signal).

L'au moins une caractéristique électrique peut être une ou plusieurs caractéristique(s) choisie(s) dans le groupe comprenant : la résistance, la conductance, la capacité, l'inductance ou une amplitude, par exemple. Cependant, d'autres caractéristiques, connues dans l'état de la technique, peuvent être utilisées dans certains modes de réalisation.

La caractéristique électrique peut également être surveillée pour détecter un changement de la caractéristique dans le temps, plutôt que pour uniquement surveiller la valeur instantanée ou absolue.

*Borne électrique*

La borne électrique peut être reliée électriquement au conduit et/ou à un élément électroconducteur qui passe à travers ou le long du conduit pour fournir le signal électrique à partir du capteur. La borne électrique peut fournir un point de liaison pour relier l'élément électroconducteur à un système de surveillance via un câblage externe ou une liaison sans fil.

Le câblage externe peut envoyer ou recevoir des signaux électriques vers ou depuis le capteur via la borne électrique et le conduit et/ou peut envoyer un signal qui indique l'état du conduit. La borne électrique peut comprendre un boîtier dans lequel une ou plusieurs borne(s) électrique(s) ou liaison(s) électrique(s) est/sont prévue(s) comme cela est bien connu dans l'état de la technique.

La borne électrique peut être montée sur un connecteur du système de fluide ou une structure environnante. Lorsque la borne électrique est montée sur un connecteur, cela peut être appelé connecteur de borne ou connecteur d'interface. Le connecteur dans lequel un capteur est prévu peut être décrit comme un connecteur distant ou un connecteur de détection. On notera que le connecteur de borne peut également inclure un ou plusieurs capteur(s) faisant partie du système de détection.

*Unité de traitement*

Dans certains modes de réalisation, la borne électrique peut comprendre une unité de traitement configurée pour recevoir le signal électrique à partir du capteur. De plus ou en variante, l'unité de traitement peut être configurée pour surveiller au moins une caractéristique électrique du conduit. De plus ou en variante, l'unité de traitement peut être configurée pour déterminer un état du conduit ou d'un connecteur sur lequel le capteur est monté. Dans certains modes de réalisation, l'unité de traitement peut être située à distance de la borne électrique. Ainsi, l'unité de traitement peut faire partie d'un système de surveillance différent ou plus grand tel qu'un système de diagnostic embarqué. Ainsi, le signal électrique provenant du conduit ou du capteur peut être transmis à l'unité de traitement via la borne électrique, ou la borne électrique peut inclure l'unité de traitement qui délivre en sortie soit une alerte, soit un signal qui indique l'état du conduit ou du connecteur.

L'unité de traitement peut être configurée pour déterminer un état de fuite dans le conduit en utilisant l'au moins une caractéristique électrique surveillée. L'état de fuite peut être déterminé à partir de signaux électriques reçus à partir du capteur ou du conduit. L'état de fuite peut correspondre à une panne du conduit ou à une déconnexion (totale ou partielle) d'un ou de plusieurs connecteur(s).

L'unité de traitement peut être configurée pour traiter un signal ou plusieurs signaux ultrasonore(s) (par exemple des signaux provenant d'un transducteur ultrasonore) et/ou un signal ou plusieurs signaux électrique(s) et/ou une ou plusieurs caractéristique(s) électrique(s). Les signaux ultrasonores peuvent être basés sur des technologies de détection classiques telles qu'une excitation ou une résonance d'onde continue ou pulsée.

Lorsque de multiples éléments électroconducteurs font partie d'un conduit, les multiples éléments peuvent être assemblés de sorte qu'une cassure d'un ou de plusieurs des chemins électroconducteurs fournit un changement par palier d'une caractéristique électrique ou d'un signal électrique qui est transmis le long des multiples chemins électroconducteurs. Cela peut rendre plus facile la détection des dommages.

Les multiples éléments électroconducteurs peuvent être surveillés séparément. Les multiples éléments électroconducteurs peuvent être surveillés pour déterminer des changements relatifs des éléments électroconducteurs en utilisant, par exemple, un circuit en pont.

Les signaux/caractéristiques électriques peuvent comprendre la surveillance de la mesure de la résistance à la terre en utilisant des conducteurs utilisés à des fins ESD (décharge électrostatique) et/ou EMI (interférences électromagnétiques).

En plus des éléments électroconducteurs prévus dans le conduit, le système de détection peut utiliser des chemins conducteurs extérieurs tels que, par exemple, le châssis d'un véhicule pour un chemin de retour. Les multiples éléments électroconducteurs peuvent inclure un ou plusieurs élément(s) électroconducteur(s) pour un chemin de retour (par exemple terre).

Dans divers modes de réalisation, l'unité de traitement peut comprendre : des circuits de commande ; et/ou des circuits de processeur; et/ou au moins un circuit intégré à application spécifique (ASIC) ; et/ou au moins un réseau prédiffusé programmable (FPGA) ; et/ou des architectures mono ou multiprocesseurs ; et/ou des architectures séquentielles/parallèles ; et/ou au moins un automate programmable (PLC) ; et/ou au moins un microprocesseur ; et/ou au moins un microcontrôleur ; et/ou une unité centrale de traitement (CPU) pour exécuter les procédés. L'unité de traitement peut être exécutée en matériel ou en logiciel, par exemple.

Le connecteur externe peut également comprendre une ou plusieurs mémoire(s). La ou les plusieurs mémoire(s) peut/peuvent comprendre un support de stockage non transitoire lisible par ordinateur comprenant des instructions lisibles par ordinateur qui, lorsqu'elles sont lues par l'unité de traitement, configurent l'unité de traitement pour réaliser les procédés décrits ici. Les instructions lisibles par ordinateur peuvent comprendre un code exécutable relatif à la surveillance ou à la détermination ou à la catégorisation du conduit ou d'une fuite, par exemple. La ou les plusieurs mémoire(s) peut/peuvent comprendre : une mémoire volatile, par exemple un ou plusieurs module(s) de mémoire vive dynamique (DRAM) et/ou module(s) de mémoire vive statique (SRAM) ; et/ou une mémoire non volatile, par exemple, un ou plusieurs module(s) de mémoire morte (ROM), qui peut/peuvent par exemple comprendre une mémoire Flash et/ou un autre dispositif de mémoire morte effaçable et programmable électriquement (EEPROM).

*Connecteurs*

Le conduit peut se terminer par ou inclure un ou plusieurs connecteur(s) qui assemblent une extrémité du conduit à un autre élément dans le système de fluide, ou assemblent deux parties du conduit. Le connecteur peut être appelé connecteur de fluide car il relie le trajet de fluide, cependant, le connecteur de fluide peut également inclure des éléments électriques faisant partie du chemin de signal électrique et/ou un élément électroconducteur utilisé pour transmettre des signaux électriques du capteur à la borne électrique. Comme indiqué ci-dessus, les connecteurs peuvent comprendre, par exemple, des connecteurs à compression ou des connecteurs à ajustage par poussée présentant un ajustement avec serrage et/ou un ou plusieurs élément(s) d'étanchéité comme cela est bien connu dans l'état de la technique.

Il peut y avoir une pluralité de connecteurs. Chacun de la pluralité de connecteurs peut être associé à un conduit différent. La pluralité de conduits peuvent être agencés en série, en parallèle ou dans un agencement radial. La pluralité de conduits peuvent appartenir à des systèmes distincts qui peuvent ou non concerner le même système de fluide. Ainsi, il peut y avoir une pluralité de conduits et/ou de connecteurs qui sont reliés électriquement à une borne électrique et/ou une unité de traitement commune.

La fourniture d'une seule borne électrique et/ou unité de traitement pour un certain nombre de capteurs ou de conduits de détection peut réduire l'infrastructure nécessaire pour mettre en œuvre le système de détection.

Les connecteurs et le conduit peuvent inclure des fonctionnalités d'alignement qui ne permettent que l'accouplement dans une orientation prédéterminée de sorte que tous les capteurs utilisés pour détecter l'accouplement du connecteur peuvent être placés dans des emplacements distincts pour permettre l'alignement de parties correspondantes dans le capteur.

La liaison électrique entre les sections de conduit et/ou les connecteurs peut être assurée par une liaison conductrice ayant une interface à faible résistance pour permettre une transmission efficace de tous les signaux électriques. La liaison électrique peut inclure de multiples ensembles de connecteurs pour fournir des chemins électriques distincts. Comme indiqué ci-dessus, les chemins peuvent inclure un ou plusieurs chemin(s) de signal et un ou plusieurs chemin(s) de retour.

La liaison électrique et/ou le capteur peut/peuvent inclure une ou plusieurs bobine(s) pour un couplage inductif à travers le connecteur. Dans certains modes de réalisation, la liaison électrique peut être assurée par un époxy conducteur ou autre analogue dans l'interface de liaison. D'autres éléments mécaniques peuvent être inclus pour aider à ponter la liaison, tels que des contacts électriques classiques qui entrent en contact avec un élément électroconducteur à l'intérieur ou sur le conduit, comme une surtresse.

*Capteur*

Les connecteurs peuvent comprendre un ou plusieurs capteur(s) pour détecter l'accouplement des connecteurs de sorte qu'une déconnexion partielle ou totale du connecteur et/ou le risque d'une fuite associée au connecteur peut/peuvent être déterminé(s). Le capteur peut être n'importe quel capteur approprié connu dans l'état de la technique et peut comprendre, par exemple, un transducteur, des contacts électriques ou un capteur magnétique.

Le capteur peut être configuré pour déterminer une pression de contact étanche et/ou un alignement des parties de connecteur (par exemple un alignement le long d'un axe d'insertion des parties de connecteur). Dans le cas d'une pression de contact étanche, le capteur peut comprendre un ou plusieurs d'un capteur ultrasonore et d'un capteur de mesure de force. Le capteur de mesure de force peut être un capteur ultrasonore dans lequel la réponse ultrasonore du connecteur est mesurée permettant de déterminer la pression de contact, ou un capteur électrique tel qu'un extensomètre ou autre analogue est utilisé pour déterminer la pression de contact.

Le capteur d'alignement peut comprendre un ou plusieurs d'un capteur électrique, d'un capteur magnétique et d'un capteur ultrasonore. Le capteur d'alignement peut comprendre un capteur sans fil tel qu'une bobine d'induction ou des contacts électriques qui s'accouplent lorsque le connecteur est totalement inséré.

Le capteur peut transmettre un signal à la borne électrique en utilisant le conduit, comme décrit ci-dessus. Le capteur peut également recevoir un signal ou plusieurs signaux électrique(s) via le conduit.

Le capteur peut être fourni en tant que partie d'une unité de détection qui est fabriquée séparément et fixée à un connecteur avant, pendant ou après l'assemblage du système de fluide. Le capteur peut comprendre un boîtier de capteur qui est configuré pour être accouplé ou couplé à un connecteur par un(e) ou plusieurs élément(s) de fixation ou partie(s) de liaison. Par exemple, le capteur peut être un collier dans lequel une surface externe du connecteur est reçue au moyen d'un ajustement avec serrage ou par compression. Le boîtier de capteur peut être fixé par un ou plusieurs élément(s) de fixation tels qu'une sangle, une attache, un boulon, un adhésif ou un clip, par exemple.

*Fonctionnement*

Comme noté ci-dessus, le fonctionnement du système de détection peut comprendre la réception d'un signal à partir d'un capteur placé dans un connecteur du conduit. Le signal peut être surveillé pour déterminer une caractéristique électrique du signal (qui correspond à un état ou une caractéristique électrique du conduit ou du capteur) ou un changement du signal. Le changement du signal peut être un changement d'amplitude ou une perte totale de signal due à la panne ou à la coupure du conduit ou du connecteur. Dans certains modes de réalisation, le contenu fréquentiel et/ou la phase et/ou la synchronisation du signal peuvent changer. Dans certains modes de réalisation, des signaux électriques peuvent être injectés dans le conduit et surveillés pour un changement. Par exemple, une tension peut être appliquée à un ou plusieurs élément(s) électroconducteur(s) et la tension est surveillée pour déterminer si les caractéristiques électriques du conduit ont changé. Le signal injecté peut être séparé en un signal transmis au capteur ou reçu à partir de celui-ci.

Lorsqu'un changement d'une caractéristique électrique est détecté, la raison du changement peut être déterminée et une évaluation est effectuée pour savoir si cela indique une fuite dans le système ou, dans certains modes de réalisation, si le système s'est dégradé de sorte que le risque de fuite peut augmenter.

Une alerte appropriée peut être fournie à un utilisateur du système ou de la machine dans laquelle le système est installé, par exemple un véhicule, de sorte que des mesures appropriées puissent être prises.

*Modes de réalisation spécifiques*

Un certain nombre de modes de réalisation spécifiques en relation avec les dessins sont décrits ci-dessous. On notera que les fonctionnalités des modes de réalisation spécifiques peuvent être utilisées de manière interchangeable lorsque cela est techniquement possible pour fournir des modes de réalisation intermédiaires.

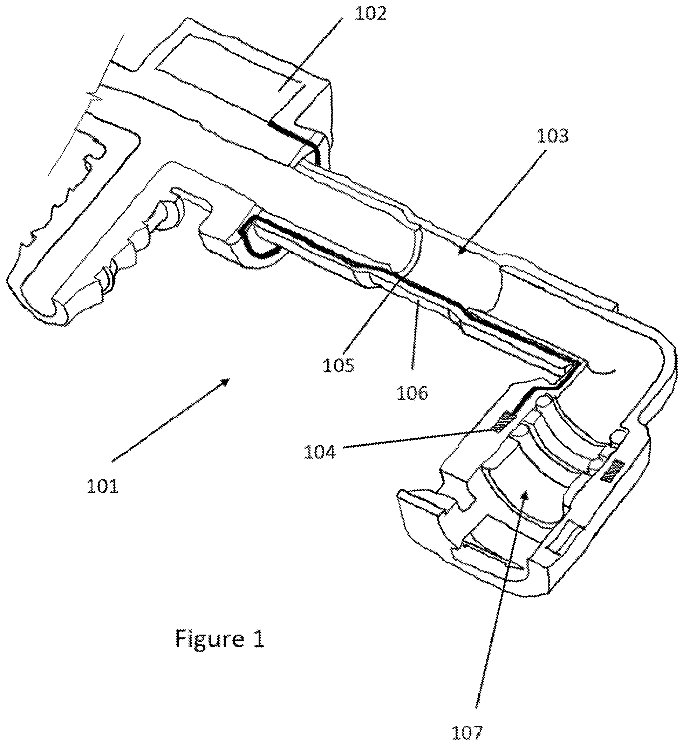

En référence à la figure 1, un système de détection amélioré est prévu, lequel système convient à une utilisation en tant que système de recyclage des gaz de carter (PCV) 101. Le système de détection comporte une borne électrique 102 (qui peut également être appelée interface de communication), un conduit 103 et un capteur 104. La borne électrique et le capteur 104 peuvent être reliés électriquement via le conduit 103. Comme on peut le voir, la liaison électrique peut être réalisée avec un ou plusieurs élément(s) conducteur(s) 105 qui fait/font partie du conduit 103.

La borne électrique 102 peut être en communication avec, ou en interface avec, un système de diagnostic embarqué (OBD) (non représenté) d'un véhicule, par exemple. L'OBD peut être configuré pour fournir à un utilisateur (par exemple le conducteur du véhicule ou un mécanicien) une alerte relative à un ou plusieurs système(s) du véhicule. L'alerte peut concerner un état du système de fluide pour lequel le système de détection est prévu afin d'en assurer la surveillance. L'état peut être un changement de pression ou une perte de charge, par exemple. L'état peut indiquer une fuite dans le système.

La fuite peut être provoquée par une panne d'un ou de plusieurs conduit(s) ou connecteur(s), telle qu'une rupture de la paroi d'un conduit et/ou une coupure totale ou partielle provoquant une fuite de fluide.

La borne électrique 102 peut être reliée électriquement au capteur 104 avec un élément électroconducteur 105. L'élément électroconducteur 105 peut faire partie ou être couplé à une paroi 106 d'un conduit 103. Dans un mode de réalisation, le conduit 103 peut être approprié pour le transfert de gaz d'un carter (non représenté) vers une chambre de combustion (non représentée) d'un moteur à combustion interne (non représenté).

Dans l'exemple de la figure 1, le conduit de détection 103 est tubulaire avec une section transversale circulaire. Cependant, le conduit 103 pourrait avoir une forme quelconque appropriée pour transférer un gaz ou un autre fluide. Le conduit 103 peut être fabriqué à partir d'un matériau approprié quelconque qui peut être un matériau conducteur, tel qu'un polymère conducteur, ou un matériau isolant pour isoler l'élément électroconducteur 105. L'élément conducteur 105 forme un chemin de signal électrique entre la borne électrique et le capteur.

La borne électrique 102 peut inclure une ou plusieurs unité(s) de traitement configurée(s) pour injecter un signal électrique dans le chemin de signal et pour surveiller un changement du signal électrique provoqué par une déformation ou une cassure de l'élément conducteur 105 afin d'indiquer un dommage à la paroi du conduit de détection 103. Comme cela sera discuté ci-dessous, l'élément conducteur 105 peut être couplé à la paroi 106 de manière à subir une cassure ou une déformation lorsqu'il y a un dommage à la paroi 106. Une telle cassure ou déformation de l'élément conducteur 105 peut provoquer un changement des caractéristiques électriques de l'élément conducteur 105 et/ou du signal se déplaçant le long du chemin de signal (à travers l'élément conducteur 105). Le changement de la caractéristique électrique et/ou du signal électrique peut être détecté par la borne électrique 102, permettant à l'utilisateur d'être alerté, via la borne électrique, de la rupture de la paroi 106.

Une rupture de la paroi 106 du conduit 103 pourrait être détectée sur la base d'une perte complète du signal électrique ou d'un autre changement des caractéristiques électriques sur le chemin de signal, par exemple. Le système peut être capable de détecter soit une cassure complète du conduit, soit des dommages tels qu'un trou ou un amincissement de la paroi de conduit.

Il a été constaté que ce mécanisme de détection des dommages/ruptures est plus fiable et constitue une amélioration par rapport aux systèmes PCV classiques qui utilisent des capteurs de pression pour détecter des dommages/ruptures sur la base d'un changement de pression des gaz. Les systèmes de détection selon cette divulgation sont capables de détecter des ruptures plus petites que celles qui sont détectables en utilisant des capteurs de pression. En particulier, le présent système de détection est capable de détecter des ruptures qui ont une taille supérieure ou égale à la plus petite surface de section transversale interne du conduit 103.

L'élément électroconducteur 105 peut être fabriqué à partir d'un matériau métallique. Dans ce cas, l'élément conducteur 105 peut comprendre l'un quelconque des éléments suivants : des fils, des rubans, des films ou des couches intégré(e)s dans la paroi du conduit 103 ou superposés ou surtressés sur le conduit 103. L'élément conducteur peut comprendre, par exemple, un ruban métallique enroulé autour du conduit 103 ou d'autres alternatives quelconques décrites ici ou connues dans l'état de la technique. L'élément conducteur 105 peut comprendre de multiples conducteurs pour fournir de multiples chemins de signaux. Les multiples conducteurs peuvent être fournis en tant que partie d'une paroi de conduit laminée ou stratifiée dans laquelle des couches conductrices sont séparées radialement à travers l'épaisseur de la paroi de conduit, comme décrit plus en détail ci-dessous.

L'élément électroconducteur 105 peut être fabriqué à partir d'un polymère conducteur. Dans ce cas, l'élément électroconducteur 105 peut comprendre l'une quelconque parmi : de multiples couches conductrices à l'intérieur de la paroi 106 ; et de multiples bandes de matériau conducteur pour fournir de multiples chemins de signaux. Les multiples couches conductrices peuvent être configurées pour assurer la suppression des interférences électromagnétiques.

Dans l'exemple de la figure 1, un connecteur facultatif 107 est en outre représenté, lequel connecteur peut être appelé connecteur intelligent. Le connecteur 107 peut comprendre le capteur 104 pour déterminer un état de connexion du connecteur 107. Ainsi, le capteur 104 peut être configuré pour envoyer un signal à la borne électrique 102 qui indique l'état de connexion et s'il y a une déconnexion partielle ou totale du connecteur ou un défaut d'alignement par exemple.

Le capteur 104 peut comprendre un capteur sans fil relié électriquement au chemin de signal. Le capteur 104 peut être configuré pour détecter un alignement du conduit 103 avec le connecteur intelligent 107 et changer une propriété électrique du signal lorsque l'alignement s'écarte d'une position par défaut. Le connecteur 107 peut permettre de détecter une coupure du conduit 103 à partir d'autres parties du système, qui provoquerait une fuite de fluide. Le capteur 104 peut utiliser des bobines d'induction sans fil ou la détection d'un accouplement de contacts électriques, comme cela sera décrit plus en détail ci-dessous.

Le capteur 104 peut être logé dans un boîtier de capteur. Le boîtier de capteur peut être configuré de manière à être séparé du connecteur 107 et s'ajuster autour du connecteur 107 de sorte que le capteur 104 puisse être situé dans un emplacement approprié pour détecter l'état du connecteur 107. Comme on peut le voir sur la figure 1, le boîtier de capteur peut comprendre un collier qui entoure une surface externe du connecteur 107 de manière à recevoir le connecteur de manière serrée à l'intérieur de celui-ci, par un ajustement avec serrage, par exemple.

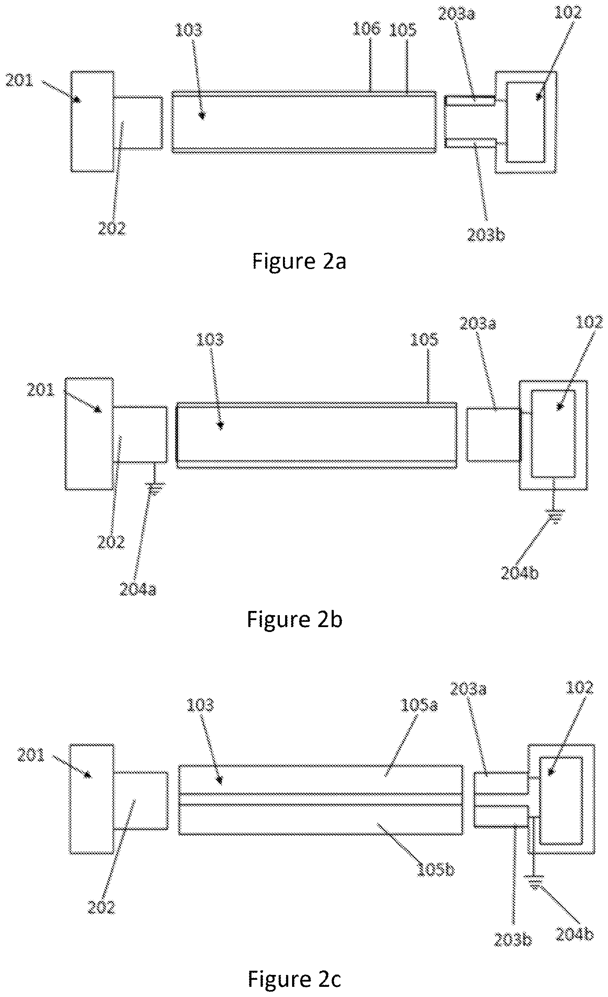

Diverses configurations possibles du système de détection telles que décrites en référence à la figure 1 vont maintenant être décrites en référence aux figures 2a à 2h.

En référence à la figure 2a, l'élément électroconducteur 105 se présente sous la forme d'une couche interne, par exemple un revêtement, d'un conduit 103. La couche interne peut être exposée à ou directement en contact avec le fluide à l'intérieur du conduit 103 lors de l'utilisation, par exemple. La borne électrique 102 peut être située au niveau d'une extrémité du conduit 103 et peut être couplée électriquement à l'élément électroconducteur 105 par deux régions conductrices locales 203a, 203b.

Le système de détection peut comprendre un connecteur distant 201 (qui peut être équivalent au connecteur 107 de la figure 1), qui est situé au niveau d'une extrémité opposée du conduit 103 par rapport à la borne électrique 102 comprenant une unité de traitement. Le connecteur distant 201 peut comprendre une région conductrice distante 202. Dans un tel agencement, le chemin de signal électrique est formé par les deux régions conductrices locales 203a, 203b, l'élément électroconducteur 105 et la région conductrice distante 202. La région conductrice distante 202 peut inclure une connexion de mise à la terre (non représentée) pour assurer une décharge statique, comme cela est connu dans l'état de la technique.

Lorsqu'il y a une rupture de la paroi de conduit 106, ou une coupure entre le connecteur distant 201 et le conduit 103 ou entre la borne électrique 102 et le conduit 103, alors il y a une modification du chemin de signal provoquant un changement d'une ou de plusieurs caractéristique(s) électrique(s) qui peut être détecté par la borne électrique 102. Dans les configurations particulières des Figures 2a-h, la borne électrique 102 peut comprendre un dispositif de surveillance de résistance et la détection d'une rupture de la paroi de conduit 106 ou d'une coupure peut être basée sur une mesure d'un changement de résistance à travers le chemin de signal. La configuration de la figure 2a s'est avérée plus efficace pour détecter les ruptures qui sont situées plus près de la borne électrique 102, en comparaison avec celles qui sont situées plus loin de la borne électrique 102.

En référence à la figure 2b, une configuration alternative à la figure 2a est présentée avec des numéros de référence correspondant aux mêmes fonctionnalités décrites ci-dessus. Il y a une seule région conductrice locale 203a reliée à l'élément électroconducteur 105, qui se présente sous la forme d'une couche conductrice interne. Il y a deux connexions de mise à la terre 204a et 204b reliées à la région conductrice distante 202 et à la borne électrique 102 respectivement. Le chemin de signal est formé par la région conductrice locale 203a, l'élément électroconducteur 105, la région conductrice distante 202 et la région entre les connexions de mise à la terre 204a et 204b. Le chemin de signal peut être considéré comme comprenant une partie de détection (dans ce cas, de la borne électrique 102 jusqu'à la connexion de mise à la terre 204a), et, une partie de retour (dans ce cas, de la connexion de mise à la terre 204a à la connexion de mise à la terre 204b).

Tel qu'utilisé ici, le terme « partie de détection » peut désigner une partie du chemin de signal s'étendant à travers le conduit 103 jusqu'à une extrémité du conduit 103 opposée à la borne électrique 102. Le terme « partie de retour » peut désigner une partie du chemin de signal « retournant » à la borne électrique 102 depuis l'extrémité du conduit 103 opposée à la borne électrique 102. La « partie de retour » du chemin de signal peut ou non être configurée pour fournir une capacité de détection. Dans l'exemple de la figure 2b, la partie de retour du chemin de signal se trouve entre les connexions de mise à la terre 204a, 204b, et est, par conséquent, typiquement sur des éléments de mise à la terre tels qu'un châssis d'un véhicule. Un avantage particulier de la configuration de la figure 2b est que les ruptures sur toute la longueur du conduit 103, ou les coupures au niveau de chaque extrémité du conduit 103, sont détectables de manière sensiblement égale.

En référence à la figure 2c, une configuration alternative à la figure 2a est présentée avec des numéros de référence correspondant aux mêmes fonctionnalités décrites ci-dessus. L'élément électroconducteur comprend deux éléments électroconducteurs séparés 105a et 105b. La borne électrique 102 comprend deux régions conductrices locales 203a, 203b pour la liaison aux éléments électroconducteurs séparés correspondants 105a, 105b. Le chemin de signal est formé par le circuit fourni par la région conductrice locale 203a, l'élément électroconducteur 105a, la région conductrice distante 202, l'élément électroconducteur 105b et la région conductrice locale 203b. Il y a une seule connexion de mise à la terre 204b reliée au connecteur d'interface 102. Dans cette configuration, les parties de détection et de retour du chemin de signal sont toutes deux situées le long du conduit 103, et il n'y a aucun recours à une connexion de mise à la terre de châssis pour la partie de retour selon la configuration de la figure 2b. Les éléments électroconducteurs 105a, 105b peuvent être des revêtements conducteurs internes segmentés appliqués sur une surface interne du conduit 103.

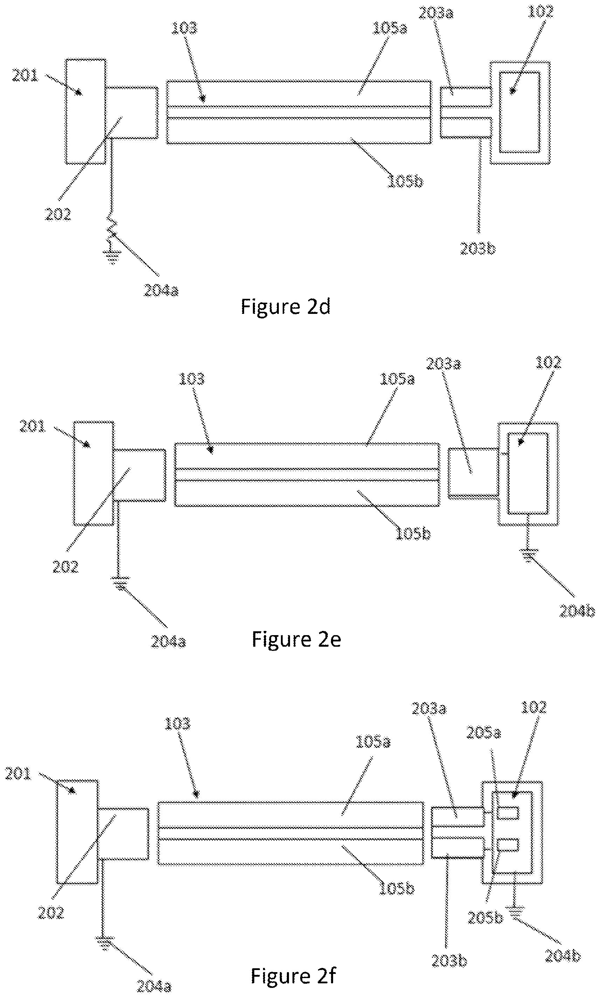

La configuration de la figure 2d est similaire à celle de la figure 2c avec l'inclusion d'une connexion de mise à la terre 204a reliée à la région conductrice distante 202. Dans cette configuration, la connexion de mise à la terre 204a comporte une résistance de mise à la terre pour garantir que la connexion de mise à la terre n'interfère pas avec la partie de retour du chemin de signal. La connexion de mise à la terre 204a à cet emplacement assure une décharge statique à partir de la région conductrice distante 202.

La configuration de la figure 2e est similaire à celle de la figure 2b, à l'exception du fait qu'il y a deux éléments électroconducteurs 105a, 105b sous la forme de multiples couches de revêtement conducteur fournissant de multiples chemins de signaux parallèles pour la partie de détection du chemin de signal. Dans les exemples, il y a plus de deux éléments électroconducteurs.

La configuration de la figure 2f est similaire à celle de la figure 2e, à l'exception du fait que chacun des deux éléments électroconducteurs est relié individuellement à un canal différent 205a, 205b au niveau de la borne électrique 102 via des régions conductrices locales différentes 203a, 203b respectivement. Par conséquent, les propriétés électriques à travers chacun des éléments électroconducteurs 105a, 105b peuvent être mesurées séparément. Par exemple, lorsque la borne électrique 102 est configurée pour mesurer la résistance, alors la résistance de chaque élément conducteur 105a, 105b peut être comparée. Si une seule résistance change, il est alors possible de détecter des ruptures particulièrement petites.

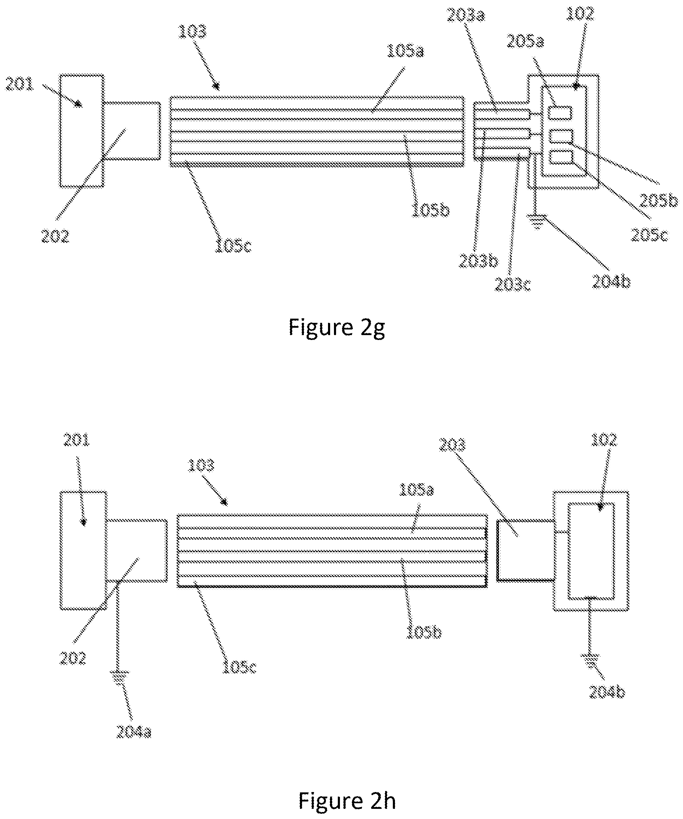

La configuration de la figure 2g est similaire à celle de la figure 2c, à l'exception du fait qu'il y a deux éléments électroconducteurs parallèles 105a, 105b formant la partie de détection du chemin de signal. Les éléments électroconducteurs 105a, 105b sont reliés à la borne électrique 102 via des canaux correspondants 205a, 205b. De plus, il y a un troisième élément électroconducteur 105c fournissant la partie de retour du chemin de signal, et est relié à un canal de mise à la terre 205c. Le canal de mise à la terre 205c est en outre relié électriquement à la connexion de mise à la terre 204b. Les éléments électroconducteurs 105a, 105b, 105c peuvent comprendre des bandes conductrices de matériau, et des ruptures de la paroi de conduit 106 de taille similaire à la largeur des bandes sont détectables. La sensibilité de la détection est améliorée en comparant les propriétés électriques (telles que la résistance) mesurées pour chaque canal.

La configuration de la figure 2h est similaire à celle de la figure 2e, à l'exception du fait qu'il y a plus de deux éléments électroconducteurs 105a, 105b, 105c en parallèle le long de la partie de détection du chemin de signal.

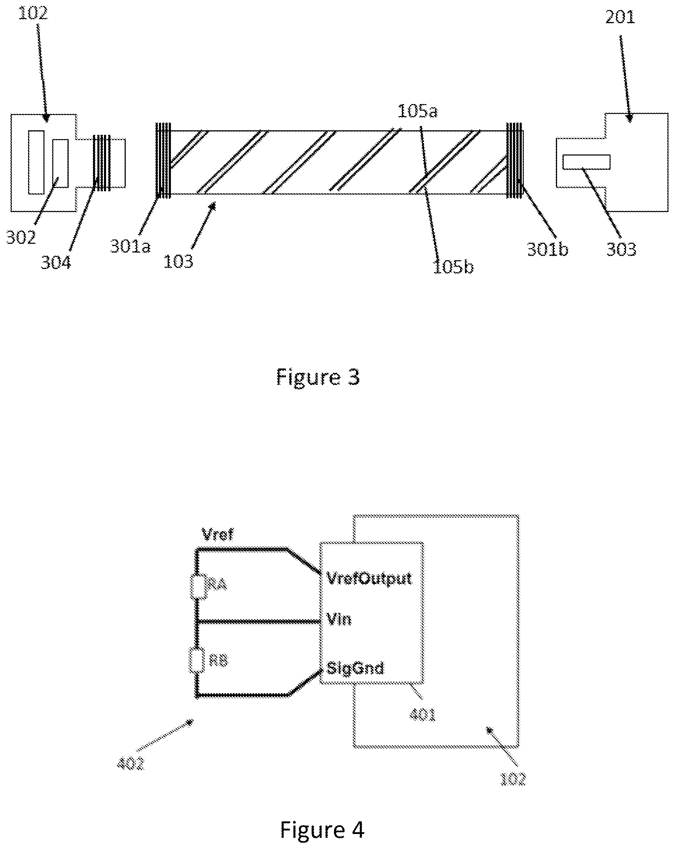

En référence à la figure 3, un système de détection est prévu, lequel système utilise une liaison sans fil entre le conduit et la borne électrique et/ou le connecteur intelligent.

Ainsi, un système de détection est représenté, lequel système peut comprendre une borne électrique 102, des éléments électroconducteurs 105a, 105b sous la forme de bobines de fil autour d'un conduit 103, et un connecteur distant 201. La borne électrique 102 et le connecteur distant 201 sont situés à des extrémités opposées du conduit 103. Les éléments électroconducteurs 105a, 105b forment une bobine au niveau des régions 301a et 301b à proximité des extrémités du conduit 103 pour assurer une transmission sans fil via un couplage inductif entre le conduit 103 et la borne électrique 102 et/ou le connecteur distant 201.

Les bobines de couplage inductif fournissent un chemin de communication électrique pour transférer des données de fréquence d'identification par radiofréquence (RFID) (et une puissance) entre une puce RFID 302 située au niveau de la borne électrique 102 et une étiquette RFID 303 située au niveau du connecteur distant 201. La bobine est résonante de préférence à une fréquence générée par la puce RFID.

Une cassure/rupture du conduit 103 peut provoquer un défaut dans les éléments conducteurs prévus le long du conduit, désactivant ou modifiant ainsi le signal de données reçu de l'étiquette RFID 303 par la puce RFID 302, assurant ainsi une détection de la cassure. En outre, la coupure du conduit depuis la borne électrique 102 ou le connecteur distant 201 désactive la lecture de l'étiquette RFID 303, provoquant ainsi une alerte.

L'élément conducteur qui fait partie du conduit est représenté comme étant agencé de manière hélicoïdale mais on notera que d'autres agencements d'éléments conducteurs tels que décrits ici peuvent être possibles.

En référence à la figure 4, la borne électrique 102 peut comprendre une unité de traitement sous la forme d'un convertisseur analogique-numérique 401. Le convertisseur analogique-numérique 401 peut comprendre une sortie de référence de tension VrefOutput configurée pour fournir une tension prédéterminée, une entrée de tension Vin et une entrée de signal de terre SigGnd. Le convertisseur 401 est relié via ces entrées/sorties à un circuit en pont 402 qui est bien connu dans l'état de la technique.

La sortie VrefOutput peut être reliée électriquement à une première branche du circuit en pont 402 comprenant une résistance série RA. Le signal SigGnd peut être relié électriquement, via une mise à la terre électrique telle qu'un châssis d'un véhicule, à une deuxième branche du circuit en pont 402 comprenant une résistance RB, qui correspond à un élément électroconducteur tel que décrit ci-dessus. L'entrée Vin peut être reliée à une troisième branche du circuit en pont 402 qui est électriquement reliée entre les extrémités des première et deuxième branches. Le convertisseur 401 est configuré pour déterminer une résistance à travers l'élément électroconducteur sur la base d'une mesure de la tension Vin à partir de la troisième branche du circuit en pont 402, et de la sortie de tension prédéterminée VrefOutput. En particulier, l'entrée Vin est calculée par l'équation mathématique suivante :

$$Vin = RB \ / \ (RA + RB) \times Vref$$

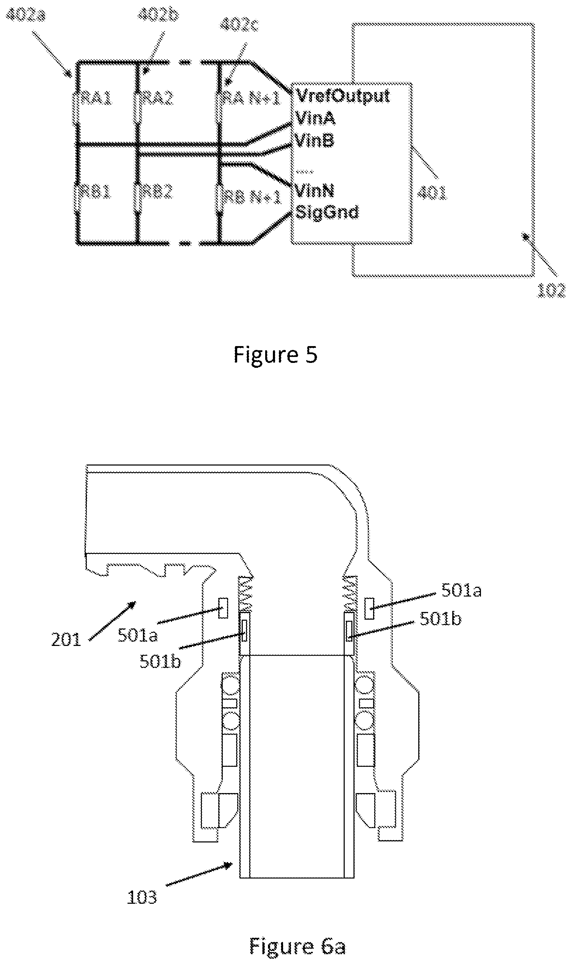

La figure 5 montre un exemple de construction de borne électrique 102 et de circuit qui est similaire à celle décrite en rapport avec la figure 4, cependant il y a de multiples résistances RB1, RB2, RBN+1, correspondant à de multiples éléments électroconducteurs, qui peuvent correspondre à de multiples éléments conducteurs couplés au conduit tel que décrit ci-dessus, par exemple en référence aux figures 2g, 2h et décrit ailleurs. Chaque élément électroconducteur correspondant aux résistances RB1, RB2, RBN+1 est en série avec une deuxième branche d'un circuit en pont correspondant 402a, 402b, 402c. Chacun des circuits en pont comporte une résistance série correspondante sur la première branche respective RA1, RA2, RAN+1. Chacun des circuits en pont fournit une entrée de tension correspondante VinA, VinB, VinN à mesurer par le convertisseur 401. Par conséquent, les résistances RB1, RB2, RBN+1 peuvent chacune être surveillées séparément fournissant un haut niveau de précision pour déterminer les ruptures d'un conduit tel que décrit ci-dessus.

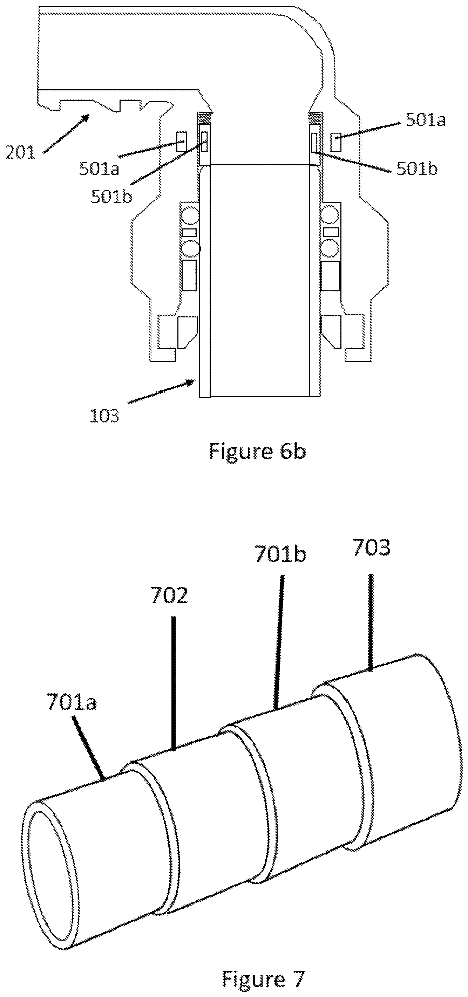

En référence aux figures 6a et 6b, un connecteur distant 201 est relié à un conduit 103. La liaison comprend une interface sans fil comportant des premiers détecteurs sans fil 501a situés sur le connecteur distant 201 et des deuxièmes détecteurs sans fil 501b situés sur le conduit 103. Les détecteurs 501a, 501b peuvent être reliés électriquement à une borne électrique tel que décrit ci-dessus (non représentée). Les détecteurs 501a, 501b peuvent être reliés à la borne électrique via les éléments électroconducteurs, et peuvent faire partie du chemin de signal décrit ci-dessus. En se référant particulièrement à la figure 6a, les détecteurs sans fil 501a, 501b ne sont pas alignés et, par conséquent, un état de coupure est détecté pour générer une alerte à un utilisateur. En se référant particulièrement à la figure 6b, les détecteurs sans fil 501a, 501b sont alignés et par conséquent, aucun état de coupure n'est détecté. Les détecteurs sans fil 501a, 501b tels que représentés ici peuvent être appliqués à tout connecteur fixé au conduit en amont ou en aval du flux de gaz pour détecter toute coupure du conduit au niveau de l'une ou l'autre des extrémités. Dans certains exemples, les détecteurs 501a, 501b comprennent des bobines conductrices intégrées, de sorte que lorsqu'un courant est appliqué à au moins l'un des détecteurs, un signal électrique différent est renvoyé en fonction de l'alignement des bobines. En variante, les détecteurs 501a, 501b peuvent fonctionner en se basant sur la détection d'un contact électrique qui est débranché lorsque les détecteurs se désalignent l'un par rapport à l'autre.

On notera que les détecteurs utilisés pour déterminer l'état de connexion du connecteur distant peuvent être magnétiques (comme un contact en ampoule, par exemple) ou peuvent être des contacts électriques qui sont mis en contact électrique après une insertion suffisante du conduit dans le connecteur ou du connecteur sur un élément différent. La liaison électrique peut être réalisée par le connecteur d'accouplement inséré 103 déplaçant ou déformant une structure ou une fonctionnalité électroconductrice.

Un conduit de détection tel que décrit ici peut être couplé à des éléments électroconducteurs conformément à la structure représentée sur la figure 7. En référence à la figure 7, il y a de multiples couches d'éléments électroconducteurs 701a, 701b. Une couche isolante 702 se trouve entre les couches d'éléments électroconducteurs 701a, 701b. Une couche externe 703 se trouve à l'extérieur du conduit de détection.

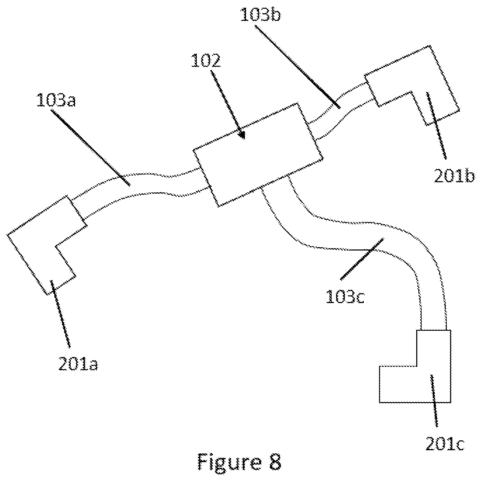

En référence à la figure 8, un système de détection peut comprendre de multiples conduits de détection (chacun étant tel que décrit ici) 103a, 103b, 103c qui sont couplés chacun à une borne électrique centrale 102, tel que décrit ici. Chacun des conduits de détection 103a, 103b, 103c peut être relié à un connecteur distant correspondant 201a, 201b, 201c. L'ensemble fournit un ensemble modulaire qui peut être adapté à de multiples types différents de géométrie. Une cassure ou une coupure de tout conduit de détection 103a, 103b, 103c, peut être détectée par une seule borne électrique 102, réduisant ainsi le nombre de liaisons/câbles, et réduisant le coût d'installation. L'ensemble représenté sur la figure 8 est un agencement radial mais d'autres sont possibles.

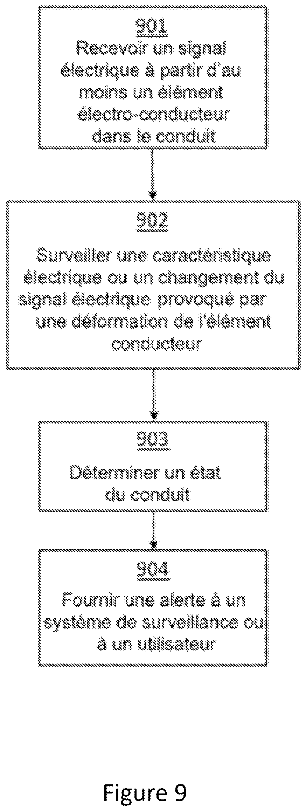

En référence à la figure 9, un procédé de fonctionnement d'un système de détection selon cette divulgation comprend, à l'étape 901, la réception d'un signal électrique à partir d'au moins un élément électroconducteur dans le conduit. Le signal électrique peut être un signal fourni par un capteur qui détecte l'état d'un connecteur et/ou un signal électrique injecté dans un élément électroconducteur du conduit pour surveiller l'état du conduit.

À l'étape 902, le signal électrique est surveillé pour une caractéristique électrique ou un changement du signal électrique provoqué par une déformation de l'élément conducteur. À l'étape 903, une détermination peut être effectuée pour savoir si un changement surveillé indique un changement de l'état du conduit, tel qu'une déformation de la forme du conduit (telle qu'une rupture), ou une coupure dans le conduit ou une mauvaise connexion d'un connecteur.

À l'étape 904, une alerte peut être fournie à un système de surveillance ou à un utilisateur. L'alerte peut correspondre au changement détecté.

On notera que l'unité de traitement décrite ici et qui est située localement par rapport aux connecteurs et le conduit peut simplement fournir un signal de sortie qui représente un changement de l'état surveillé, plutôt qu'une alerte en soi. Ainsi, la détermination de l'étape 903 et la fourniture de l'alerte peuvent être effectuées par une unité de traitement différente qui fait partie d'un système différent ou d'un système global dont le système de détection fait partie. On a constaté que les systèmes de détection tels que décrits ici fonctionnent de manière avantageuse, en particulier lorsqu'ils sont soumis à des conditions externes telles que la flexion du conduit, la présence d'eau et une température élevée - par exemple 80 degrés C. Lorsque la propriété électrique surveillée est une résistance à travers l'élément électroconducteur, les constructions décrites ci-dessus fournissent une corrélation entre une taille de la rupture du conduit et un niveau de résistance mesuré par la borne électrique. Il serait donc possible pour un utilisateur d'utiliser le présent système pour déterminer la gravité de toute rupture ou tout autre dommage au conduit.

Les systèmes de détection discutés ici ne sont pas limités à une application avec des systèmes de recyclage des gaz de carter. D'autres exemples d'utilisation comportent la détection, dans des systèmes de fluide, de fluides critiques pour des systèmes de refroidissement de bloc-batterie, des systèmes de refroidissement de moteurs électriques (y compris les tubes et connecteurs du système), des systèmes de carburant à hydrogène et des systèmes de refroidissement de véhicules à hydrogène.

**Revendications**

1.    Système de détection pour détecter une panne dans un trajet de fluide d'un système de fluide, le système de détection comprenant :

au moins un conduit (103) comprenant une paroi de conduit (106) qui définit un trajet de fluide pour le transfert de fluide et au moins un élément électroconducteur (105) s'étendant le long de l'au moins un conduit (103) et qui forme un chemin de signal électrique pour un premier signal électrique qui indique un état de l'au moins un conduit (103) ; et, une borne électrique (102) reliée électriquement à l'au moins un élément électroconducteur (105) de sorte que le premier signal électrique soit transmis à la borne électrique (102) via le chemin de signal électrique ; au moins un connecteur (107) relié à l'au moins un conduit (103) et au moins un capteur (104) configuré pour déterminer un état de l'au moins un connecteur (107) et générer un deuxième signal électrique, ledit au moins un capteur (104) étant relié électriquement à l'au moins un élément électroconducteur (105) de sorte que le deuxième signal électrique soit transmis à la borne électrique (102) via le chemin de signal électrique ; et une unité de traitement pour recevoir les premier et deuxième signaux électriques et surveiller les premier et deuxième signaux électriques pour une caractéristique électrique qui indique une panne de l'au moins un conduit (103) et/ou une panne ou une déconnexion de l'au moins un connecteur (107) respectivement.

2.    Système de détection selon la revendication 1, dans lequel l'unité de traitement est configurée pour déterminer qu'une panne est présente dans l'au moins un conduit (103) ou que l'au moins un connecteur (107) est totalement ou partiellement déconnecté en utilisant la caractéristique électrique surveillée.

3. Système de détection selon la revendication 1 ou 2, dans lequel le deuxième signal électrique est un signal électrique de capteur codé avec des données provenant de l'au moins un capteur (104) et le premier signal électrique est un signal électrique de conduit codé avec des données relatives à l'état de l'au moins un conduit (103).

4. Système de détection selon la revendication 3, dans lequel le signal électrique de conduit est appliqué à l'au moins un élément électroconducteur (105) indépendamment du signal électrique de capteur.

5. Système de détection selon l'une des revendications précédentes, dans lequel la caractéristique électrique est une ou plusieurs caractéristique(s) choisie(s) dans le groupe comprenant : la résistance, la conductance, la capacité, l'inductance, la réponse en fréquence, l'amplitude ou le temps de transit, ou un changement de ceux-ci.

6. Système de détection selon l'une des revendications précédentes, dans lequel l'au moins un élément électroconducteur (105) s'étend sur toute la longueur de l'au moins un conduit (103).

7. Système de détection selon l'une des revendications précédentes, dans lequel l'au moins un élément électroconducteur (105) s'étend de manière circonférentielle autour d'une surface de la paroi de conduit (106) de l'au moins un conduit (103).

8. Système de détection selon l'une des revendications précédentes, dans lequel l'au moins un élément électroconducteur (105) est au moins partiellement intégré dans la paroi de conduit (106).

9. Système de détection selon l'une des revendications précédentes, dans lequel l'au moins un conduit (103) comprend en outre une pluralité d'éléments électroconducteurs (105a, 105b).

10. Système de détection selon la revendication 9, dans lequel le chemin de signal électrique comprend une partie de détection s'étendant de la borne électrique (102) à une extrémité distante de l'au moins un élément électroconducteur (105) au niveau d'une première extrémité de l'au moins un conduit (103), et, une partie de retour s'étendant de l'extrémité distante de l'au moins un élément électroconducteur (105) à la borne électrique (102) et dans lequel au moins l'un de la pluralité d'éléments électroconducteurs (105a, 105b) est configuré pour former ladite partie de retour du chemin de signal électrique.

11. Système de détection selon l'une des revendications précédentes, dans lequel l'au moins un élément électroconducteur (105) comprend au moins une bobine.

12. Système de détection selon la revendication 11, dans lequel l'au moins une bobine assure un couplage sans fil pour se coupler à l'au moins un connecteur (107) et/ou à l'au moins un capteur (104).

13. Système de détection selon l'une des revendications précédentes, dans lequel l'au moins un capteur (104) est un ou plusieurs capteur(s) parmi : un capteur de pression de contact étanche, un capteur d'alignement ; un capteur de contact électrique dans lequel des contacts électriques sont établis ou rompus par la liaison de l'au moins un connecteur (107) ; un capteur magnétique dans lequel un circuit magnétique est complété par la liaison de l'au moins un connecteur (107) ; un capteur sans fil ou un capteur ultrasonore.

14. Système de détection selon la revendication 13, dans lequel l'au moins un capteur (104) est intégré dans l'au moins un connecteur (107).

15. Procédé de détection d'un état d'un système de fluide utilisant le système de détection selon l'une des revendications précédentes, et comprenant les étapes consistant à :

recevoir un premier signal électrique et un deuxième signal électrique à partir d'au moins un élément électroconducteur (105) dans l'au moins un conduit (103) ; et

surveiller les premier et deuxième signaux électriques pour une caractéristique électrique qui indique une panne de l'au moins un conduit (103) et/ou une déconnexion de l'au moins un connecteur (107).

16. Procédé de la revendication **15,** comprenant en outre : la détermination d'une panne dans le trajet de fluide du système de fluide sur la base d'une caractéristique électrique surveillée.

17. Procédé de la revendication 16, dans lequel la caractéristique électrique est une ou plusieurs caractéristique(s) choisie(s) dans le groupe comprenant : la résistance, la conductance, la capacité, l'inductance, la réponse en fréquence, l'amplitude ou le temps de transit, ou un changement de ceux-ci.

**Patentansprüche**

1. Erkennungssystem zum Erkennen eines Fehlers in einem Fluidpfad eines Fluidsystems, wobei das Erkennungssystem Folgendes umfasst:

mindestens einen Kanal (103), der eine Kanalwand (106) umfasst, die einen Fluidpfad für den Fluidtransfer definiert, und mindestens ein elektrisch leitendes Element (105), das sich entlang des mindestens einen Kanals (103) erstreckt und einen elektrischen Signalweg für ein erstes elektrisches Signal bildet, das einen Zustand des mindestens einen Kanals (103) anzeigt; und

eine elektrische Klemme (102), die elektrisch mit dem wenigstens einen elektrisch leitenden Element (105) verbunden ist, so dass das erste elektrische Signal über den elektrischen Signalweg an die elektrische Klemme (102) übertragen wird;

wenigstens einen Verbinder (107), der mit dem wenigstens einen Kanal (103) verbunden ist, und wenigstens einen Sensor (104), der eingerichtet ist, um einen Zustand des wenigstens einen Verbinders (107) zu bestimmen und ein zweites elektrisches Signal zu erzeugen, wobei der wenigstens eine Sensor (104) mit dem wenigstens einen elektrisch leitenden Element (105) elektrisch verbunden ist, so dass das zweite elektrische Signal über den elektrischen Signalweg an die elektrische Klemme (102) übertragen wird; und

eine Verarbeitungseinheit zum Empfangen des ersten und zweiten elektrischen Signals und zur Überwachung des ersten und zweiten elektrischen Signals auf ein elektrisches Merkmal, das jeweils einen Ausfall des mindestens einen Kanals (103) und/oder einen Ausfall oder eine Trennung des mindestens einen Verbinders (107) anzeigt.

2. Erkennungssystem nach Anspruch 1, wobei die Verarbeitungseinheit eingerichtet ist, um unter Verwendung des überwachten elektrischen Merkmals festzustellen, dass in dem wenigstens einen Kanal (103) ein Fehler vorliegt oder dass der wenigstens eine Verbinder (107) ganz oder teilweise getrennt ist.

3. Erkennungssystem nach Anspruch 1 oder 2, wobei das zweite elektrische Signal ein elektrisches Sensorsignal ist, das mit Daten von dem mindestens einen Sensor (104) codiert ist, und das erste elektrische Signal ein elektrisches Kanalsignal ist, das mit Daten über den Zustand des mindestens einen Kanals (103) codiert ist.

4. Erkennungssystem nach Anspruch 3, wobei das elektrische Kanalsignal unabhängig vom elektrischen Sensorsignal an das mindestens eine elektrisch leitende Element (105) angelegt wird.

5. Erkennungssystem nach einem der vorhergehenden Ansprüche, wobei das elektrische Merkmal ein oder mehrere Merkmale ist, die aus der Gruppe ausgewählt sind, die umfasst: Widerstand, Leitwert, Kapazität, Induktivität, Frequenzgang, Amplitude oder Transitzeit oder eine Änderung dieser Werte.

6. Erkennungssystem nach einem der vorhergehenden Ansprüche, wobei sich das wenigstens eine elektrisch leitende Element (105) über die gesamte Länge des wenigstens einen Kanals (103) erstreckt.

7. Erkennungssystem nach einem der vorhergehenden Ansprüche, wobei sich das wenigstens eine elektrisch leitende Element (105) umlaufend um eine Oberfläche der Kanalwand (106) des wenigstens einen Kanals (103) erstreckt.

8. Erkennungssystem nach einem der vorhergehenden Ansprüche, wobei das wenigstens eine elektrisch leitende Element (105) wenigstens teilweise in die Kanalwand (106) integriert ist.

9. Erkennungssystem nach einem der vorhergehenden Ansprüche, wobei der mindestens eine Kanal (103) ferner eine Vielzahl von elektrisch leitenden Elementen (105a, 105b) umfasst.

10. Erkennungssystem nach Anspruch 9, wobei der elektrische Signalweg einen Erkennungsabschnitt umfasst, der sich von der elektrischen Klemme (102) zu einem entfernten Ende des mindestens einen elektrisch leitenden Elements (105) an einem ersten Ende des mindestens einen Kanals (103) erstreckt, und einen Rückleitungsabschnitt, der sich von dem entfernten Ende des mindestens einen elektrisch leitenden Elements (105) zur elektrischen Klemme (102) erstreckt und wobei mindestens eines der Vielzahl der elektrisch leitenden Elemente (105a, 105b) eingerichtet ist, um den Rückführungsabschnitt des elektrischen Signalwegs zu bilden.

11. Erkennungssystem nach einem der vorhergehenden Ansprüche, wobei das wenigstens eine elektrisch leitende Element (105) wenigstens eine Spule umfasst.

12. Erkennungssystem nach Anspruch 11, wobei die wenigstens eine Spule eine drahtlose Kopplung sicherstellt, um sich mit dem wenigstens einen Verbinder (107) und/oder dem wenigstens einen Sensor (104) zu koppeln.

13. Erkennungssystem nach einem der vorhergehenden Ansprüche, wobei der mindestens eine Sensor (104) einer oder mehrere der folgenden Sensoren ist: ein dichter Kontaktdrucksensor, ein Ausrichtungssensor; ein elektrischer Kontaktsensor, bei dem durch die Verbindung des mindestens einen Verbinders (107) elektrische Kontakte hergestellt oder unterbrochen werden; ein Magnetsensor, bei dem ein Magnetkreis durch die Verbindung des mindestens einen Verbinders (107) ergänzt wird; ein Drahtlossensor oder ein Ultraschallsensor.

14. Erkennungssystem nach Anspruch 13, wobei der mindestens eine Sensor (104) in den mindestens einen Verbinder (107) integriert ist.

15. Verfahren zur Erkennung eines Zustands eines Fluidsystems unter Verwendung des Erkennungssystems nach einem der vorhergehenden Ansprüche, und umfassend die Schritte:

Empfangen eines ersten elektrischen Signal und eines zweiten elektrischen Signal von mindestens einem elektrisch leitenden Element (105) in dem mindestens einen Kanal (103); und Überwachen des ersten und zweiten elektrischen Signals auf ein elektrisches Merkmal, das einen Ausfall des mindestens einen Kanals (103) und/oder eine Trennung des mindestens einen Verbinders (107) anzeigt.

16. Verfahren nach Anspruch 15,
ferner umfassend: das Feststellen eines Ausfalls in dem Fluidpfad des Fluidsystems auf Basis eines überwachten elektrischen Merkmals.

17. Verfahren nach Anspruch 16,
wobei das elektrische Merkmal ein oder mehrere Merkmale ist, die aus der Gruppe ausgewählt sind, die umfasst: Widerstand, Leitwert, Kapazität, Induktivität, Frequenzgang, Amplitude oder Transitzeit oder eine Änderung dieser Werte.

**Claims**

1. A detection system for detecting a breakdown in a fluid pathway of a fluid system, the detection system comprising:

at least one conduit (103) comprising a conduit wall (106) which defines a fluid pathway for the transfer of fluid and at least one electrically conductive element (105) extending along the at least one conduit (103) and which forms an electrical signal path for a first electrical signal which indicates a condition of the at least one conduit (103); and, an electrical terminal (102) electrically connected to the at least one electrically conductive element (105) such that the first electrical signal is transmitted to the electrical terminal (102) via the electrical signal path; at least one connector (107) connected to the at least one conduit (103) and at least one sensor (104) configured to determine a condition of the at least one connector (107) and generate a second electrical signal, said at least one sensor (104) being electrically connected to the at least one electrically conductive element (105) such that the second electrical signal is transmitted to the electrical terminal (102) via the electrical signal pathway; and a processing unit for receiving the first and second electrical signals and monitoring the first and second electrical signals for an electrical characteristic which is indicative of a breakdown of the at least one conduit (103) and/or a breakdown or disconnection of the at least one connector (107), respectively.

2. The detection system according to claim 1, wherein the processing unit is configured to determine that a breakdown is present in the at least one conduit (103) or that the at least one connector (107) is fully or partially disconnected using the monitored electrical characteristic.

3. The detection system according to claim 1 or 2, wherein the second electrical signal is a sensor electrical signal encoded with data from the at least one sensor (104) and the first electrical signal is a conduit electrical signal encoded with data relating to the condition of the at least one conduit (103).

4. The detection system according to claim 3, wherein the conduit electrical signal is applied to the at least one electrically conductive element (105) independently of the sensor electrical signal.

5. The detection system according to any of the preceding claims, wherein the electrical characteristic is one or several characteristics selected from the group comprising: resistance, conductance, capacitance, inductance, frequency response, amplitude or transit time, or a change thereof.

6. The detection system according to any of the preceding claims, wherein the at least one electrically conductive element (105) extends along the entire length of the at least one conduit (103).

7. The detection system according to any of the preceding claims, wherein the at least one electrically conductive element (105) extends circumferentially around a surface of the conduit wall (106) of the at least one conduit (103).

8. The detection system according to any of the preceding claims, wherein the at least one electrically conductive element (105) is at least partially embedded within the conduit wall (106).

9. The detection system according to any of the preceding claims, wherein the at least one conduit (103) further comprises a plurality of electrically conductive elements (105a, 105b).

10. The detection system according to claim 9, wherein the electrical signal path comprises a sensing portion extending from the electrical terminal (102) to a remote end of the at least one electrically conductive element (105) at a first end of the at least one conduit (103), and a return portion extending from the remote end of the at least one electrically conductive element (105) to the electrical terminal (102) and wherein at least one of the plurality of electrically conductive elements (105a, 105b) is configured to form said return portion of the electrical signal path.

11. The detection system according to any of the preceding claims, wherein the at least one electrically conductive element (105) comprises at least one coil.

12. The detection system according to claim 11, wherein the at least one coil provides a wireless coupling for coupling to the at least one connector (107) and/or the at least one sensor (104).

13. The detection system according to any of the preceding claims, wherein the at least one sensor (104) is one or several sensors from among: a seal contact pressure sensor, an alignment sensor; an electrical contact sensor in which electrical contacts are made or broken with the connection of the at least one connector (107); a magnetic sensor in which a magnetic circuit is completed with the connection of the at least one connector (107); a wireless sensor or an ultrasonic sensor.

14. The detection system according to claim 13, wherein the at least one sensor (104) is embedded within the at least one connector (107).

15. A method for detecting a condition of a fluid system using the detection system according to any of the preceding claims, and comprising the steps of:

    receiving a first electrical signal and a second electrical signal from at least one electrically conductive element (105) in the at least one conduit (103); and
    monitoring the first and second electrical signals for an electrical characteristic which is indicative of a breakdown of the at least one conduit (103) and/or a disconnection of the at least one connector (107).

16. The method of claim 15, further comprising: determining a breakdown in the fluid pathway of the fluid system based on a monitored electrical characteristic.

17. The method of claim 16, wherein the electrical characteristic is one or several characteristics selected from the group comprising: resistance, conductance, capacitance, inductance, frequency response, amplitude or transit time, or a change thereof.

Figure 1

Figure 2a

Figure 2b

Figure 2c

Figure 2d

Figure 2e

Figure 2f

Figure 2g

Figure 2h

Figure 3

Figure 4

Figure 5

Figure 6a

Figure 6b

Figure 7

Figure 8

Figure 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 107676185 A